(19) Europäisches Patentamt
European Patent Office
Office européen des brevets

(11) EP 3 259 301 B1

(12) **EUROPEAN PATENT SPECIFICATION**

(45) Date of publication and mention of the grant of the patent:
**27.03.2019 Bulletin 2019/13**

(21) Application number: **16707206.5**

(22) Date of filing: **11.02.2016**

(51) Int Cl.:
***C08G 64/40*** *(2006.01)* ***C08L 69/00*** *(2006.01)*

(86) International application number:
**PCT/IB2016/050732**

(87) International publication number:
**WO 2016/132256 (25.08.2016 Gazette 2016/34)**

(54) **A METHOD OF QUENCHING A MELT POLYCARBONATE**

VERFAHREN ZUR ABSCHRECKUNG EINES SCHMELZEPOLYCARBONATS

PROCÉDÉ DE DÉSACTIVATION D'UN POLYCARBONATE À L'ÉTAT FONDU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.02.2015 EP 15382061**

(43) Date of publication of application:
**27.12.2017 Bulletin 2017/52**

(73) Proprietor: **SABIC Global Technologies B.V.**
**4612 PX Bergen op Zoom (NL)**

(72) Inventor: **FERNANDEZ, Ignacio Vic**
**E-30390 La Aljorra (ES)**

(74) Representative: **Modiano, Micaela Nadia et al**
**Modiano & Partners**
**Thierschstrasse 11**
**80538 München (DE)**

(56) References cited:
**WO-A1-00/56801**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 259 301 B1

## Description

### TECHNICAL FIELD

The present disclosure describes a process of quenching a melt polycarbonate.

### BACKGROUND

Melt polymerization of polycarbonate is typically achieved by reacting a bisphenol compound with a carbonate compound in a series of reactors in the presence of a catalyst. After the polymerization is complete, the catalyst can be quenched (referred to herein as a quenched polycarbonate) to result in a quenched polycarbonate composition. Melt polycarbonate wherein a quencher is not added can result in polycarbonates with reduced optical properties. This reduction in optical quality can ultimately reduce the applicability of unquenched polycarbonate for applications such as media storage.

A process of quenching an unquenched melt polycarbonate is therefore desired.

WO 00/56801 A1 discloses a process for forming a quenched polycarbonate composition comprising the step of mixing an active catalyst containing unquenched intermediate melt polycarbonate and a masterbatch containing a quenched polycarbonate carrier and more than 0.5 ppm of free quencher.

### BRIEF DESCRIPTION

Disclosed herein is a method of quenching a melt polycarbonate and the quenched polycarbonate made therefrom.

A process according to the invention for forming a quenched composition comprises: mixing 40 to 95 wt% of an unquenched melt polycarbonate and 5 to 60 wt% of a quenched melt polycarbonate to form the quenched composition, wherein the weight percentage is based upon a total weight of the quenched composition; wherein the quenched polycarbonate was formed from a first melt polymerization, and wherein the quenched melt polycarbonate comprises greater than or equal to 0.5 ppm of free quencher; wherein the unquenched polycarbonate was formed from a second melt polymerization, wherein the unquenched melt polycarbonate comprises an active catalyst that is capable of further polymerizing the unquenched polycarbonate and that was used during the second melt polymerization.

The above described and other features are exemplified by the following figure and detailed description.

### BRIEF DESCRIPTION OF THE DRAWING

Refer now to the figure, which is an exemplary embodiment, and wherein the like elements are numbered alike.

FIG. 1 is an illustration of a process for quenching an unquenched melt polycarbonate.

### DETAILED DESCRIPTION

A process was developed for adding a quencher to an unquenched melt polycarbonate. The process comprises adding a quenched melt polycarbonate comprising free quencher to an unquenched melt polycarbonate. The unquenched polycarbonate can be a polycarbonate that has been extruded and passed through a melt filter with optional pelletization. The quenched polycarbonate can be added to the unquenched polycarbonate, for example, as a masterbatch. The quenched melt polycarbonate can consist essentially of (or can consist of) the melt polymerized polycarbonate, a quenched catalyst, quencher, and optionally one or more of unreacted monomer, phenol, and ester-substituted phenol. The amount of quenched melt polycarbonate that can be added to the unquenched melt composition can be enough to quench any active catalyst in the unquenched melt polycarbonate. The quenched polycarbonate can comprise greater than 0.5 part per million by weight (ppm) of free quencher, for example, 0.5 to 20 ppm, specifically, 1 to 20 ppm, more specifically, 1 to 10 ppm, or 5 to 15 ppm, or 5 to 10 ppm, based on the total weight of the quenched polycarbonate. The mixture can comprise greater than or equal to 5 weight percent (wt%) of the quenched polycarbonate, for example, 5 to 20 wt%, or 5 to 10 wt%, or 8 to 15 wt% based on the total weight of the mixture.

As used herein, the terms "unquenched melt polycarbonate" and "unquenched polycarbonate" refer to a polycarbonate comprising greater than or equal to 10 wt%, for example, greater than or equal to 20 wt% active catalyst (based upon a total weight of catalyst used during melt polymerization of the unquenched melt polycarbonate), and where less than 1 ppm, for example, less than or equal to 0.5 ppm, or less than or equal to 0.1 ppm, or less than or equal to 0.01 ppm, or less than or equal to 0.001 ppm (each based on the weight of the unquenched polycarbonate), or 0 wt% quenching agent has been added during the manufacture of the unquenched melt polycarbonate. Specifically, no quenching agent can be added during the melt polymerization of an unquenched melt polycarbonate. For example,

the terms "unquenched melt polycarbonate" and "unquenched polycarbonate" refer to a polycarbonate that comprises an active catalyst, where the catalyst used in the polycarbonate polymerization was not neutralized, and where the reactivity between the polycarbonate and the catalyst was not reduced. The active catalyst can comprise one or both of an active quaternary catalyst and an active alkali catalyst, wherein the active alkali catalyst comprises one or both of alkali ions and alkaline earth ions.

As used herein, the terms "quenched melt polycarbonate" and "quenched polycarbonate" refer to a polycarbonate comprising greater than or equal to 0.5 ppm, e.g., greater than or equal to 1 ppm, of free quenching agent based on the total weight of the quenched polycarbonate. As used herein, "free quencher" defines a compound that is unreacted and where the quencher is available to neutralize a catalyst.

As used herein, the term "active catalyst" refers to a catalyst capable of polymerizing a polycarbonate.

A "quenching agent" or "quencher" is a term of art that refers to an agent added to a melt polymerized polycarbonate specifically to reduce the level of activity of the catalyst. As is mentioned above, as used herein, "free quencher" is quencher that is available to neutralize catalyst.

The process can comprise mixing an unquenched melt polycarbonate and a quenched melt polycarbonate to form a quenched composition. The quenched polycarbonate is formed from a first melt polymerization, wherein the first melt polymerization comprises adding a quencher to form the quenched polycarbonate, wherein the quenched melt polycarbonate comprises greater than or equal to 0.5 ppm of free quencher. The unquenched polycarbonate is formed from a second melt polymerization, wherein the unquenched melt polycarbonate comprises active catalyst used during the second melt polymerization, and wherein the second melt polymerization is free of a quencher addition.

The process can comprise receiving a first shipment of the quenched polycarbonate from a first source. The process can further comprise receiving a second shipment of the unquenched polycarbonate from a second source, wherein the second source is different than the first source. The first source and the second source can each independently be, for example, a primary supplier that produces the polycarbonate itself or a secondary supplier that obtains the polycarbonate from the primary supplier and then sells the obtained polycarbonate. In other words, the quenched polycarbonate and optionally the unquenched polycarbonate can be polymerized off-site in a different location from the quenching of the unquenched polycarbonate.

The mixing can comprise mixing 40 to 95 wt%, specifically, 60 to 95 wt%, more specifically, 80 to 95 wt% of the unquenched melt polycarbonate based on the total weight of the composition. The mixing can comprise mixing 5 to 60 wt%, specifically, 5 to 40 wt%, more specifically, 5 to 20 wt% of the quenched melt polycarbonate based on the total weight of the composition.

The unquenched melt polycarbonate and the quenched melt polycarbonate can each independently be added via a feeder, a discharger, or a manual fill station. The mixture can be mixed in a mixer that can be a double shaft mixer rotating in opposite directions to form the quenched composition. The process can optionally further comprise introducing the quenched composition to a buffer hopper; feeding the quenched composition from the buffer hopper to a pellet compactor via a screw feeder; compacting the quenched composition into pellets; screening the pellets into a desired size range; introducing the screened pellets to a product hopper; and feeding the screened pellets from the product hopper into a product bag.

For example, the process can comprise introducing the unquenched melt polycarbonate, the quenched melt polycarbonate, and optional additive to an integrated system for mixing and pelletizing the quenched composition. The integrated system can comprise a feed and blend system, a pellet mill, a product handling system, and a utilities system. The integrated system can advantageously result in an improved homogeneity as compared to previous processes. The integrated system can produce greater than or equal to 450 tons of product per year, specifically, greater than or equal to 500 tons of product per year. The process can be entirely automated. The integrated system can reduce the preparation time, for example, by reducing a mixing time from greater than 15 minutes to less than 10 minutes, specifically, 30 seconds to 8 minutes, more specifically, 1 to 8 minutes, still more specifically, 3 to 7 minutes. After mixing, the time it takes for the quenched composition to be processed through to screening, i.e., from the time the quenched composition exits the mixer to screening can be less than or equal to 50 minutes, specifically, less than or equal to 40 minutes.

The feed and blend system can comprise various component feeder(s) and/or component discharger(s) for feeding components such as the unquenched melt polycarbonate, the quenched melt polycarbonate, and optional additive into a mixer. The feed and blend system can comprise at least one component feeder or component discharger, where the component feeder can be used for feeding, for example, less than or equal to 100 kilograms (kg), e.g., less than or equal to 20 kg of a material to the mixer and where the component discharger can be a big bag unloading station, where the big bag can, for example, contain greater than or equal to 300 kg of pellets, for example, 400 kg of pellets. The feed and blend system can comprise 1, specifically, 1 to 10, more specifically 3 to 6 component feeders. The component feeders can be, for example, a feeder commercially available from K-TRON. The feed and blend system can comprise 1, specifically, 1 to 10, more specifically, 1 to 3 component dischargers. The feed and blend system can also comprise a manual fill location for components that are present in small amounts, such as those that are present in an amount less than or equal to 15 wt%, specifically, less than or equal to 11 wt% based on the total weight of the

composition, for example, less than or equal to 10 wt%.

At least one of the component feeders can be an assisted component feeder that is designed to a handle difficult material, such as one that does not flow without assistance out of the feeder, where an amount of the component would remain in the feeder and/or along the sides of the feeder. The assisted component feeder can comprise a twin screw, an internal agitator, a vibrator, a knocker system, or a combination comprising one or more of the foregoing, integrated to avoid material blocks. The vibrator can be a pneumatic vibrator that can impart a frequency a vibration on the feeder to avoid bridge generation of the material and to achieve flow of the material into the mixer. As used herein "bridge generation" refers to the formation of material bridges that span one side of the feeder to another such that the bridge material would otherwise remain in the feeder. The assisted component feeder can be, for example, a vibratory feeder commercially available from K-TRON.

The feed and blend system can comprise at least 1 mixer. The mixer can be a high speed, double shaft mixer, where the double shaft mixer rotates in opposite directions such as the PEGASUS mixer commercially available from DINNISSEN BV. The use of a double shaft mixer can create a fluidized zone, which lies at the core of the mixing process. Such a mixer can allow for decreased mixing times of less than 5 minutes, specifically, 30 seconds to 4 minutes, more specifically, 30 seconds to 1 minute, while minimizing the amount of energy to be imparted on the composition. A maximum amount of energy that can be imparted on a specific composition can be defined as the energy where at least one of the components, such as an antioxidant, melts. For example, when a component with a melting temperature of 60 degrees Celsius (°C), specifically, 50°C melts due to the shear imposed by the mixer.

The mixer can mix the components at a tip speed of 0.1 to 100 meters per second (m/s), specifically, 1 to 50 m/s, more specifically, 1 to 5 m/s. The mixer can mix the components to form the quenched composition.

After the quenched composition is prepared, the quenched composition can be fed to the pellet mill. The quenched composition can be fed to the pellet mill via an automated process. For example, the mixer can comprise a discharge gate, where during transfer the discharge gate can be opened to allow for material transfer out of the mixer. The mixer shafts, i.e. the mixer blades, can be rotating during transfer to facilitate transfer and ensure that a maximum amount of material is transferred.

The pellet mill can comprise a buffer hopper, a mill feeder, a pellet compactor, and a screener. The buffer hopper can be responsible for introducing the quenched composition to the mill feeder. The buffer hopper can comprise a vibrator that can vibrate at a frequency of 2,000 to 100,000 vibrations per minute (vpm), specifically, 10,000 to 40,000 vpm, more specifically, 20,000 to 30,000 vpm, for example, 25,000 vpm in order to facilitate flow of the quenched composition and to avoid bridge generation of the material and to achieve flow of the quenched composition into the mill feeder. The vibrator on the buffer hopper can be a pneumatic vibrator system.

A mill feeder can be responsible for feeding the quenched composition from the buffer hopper to the pellet compactor. The mill feeder can be a screw feeder (such as K2 MV-S60 commercially available from K-TRON). The incorporation of a screw feeder here versus a typical configuration with a butterfly valve has the advantage of better control of the material flow through the feeder. The screw feeder has the advantage of flow control through the feeder as compared to a butterfly valve that has only two positions, open and closed. The mill feeder can operate at a rate of 45 to 4,500 decimeters cubed per hour ($dm^3/h$), specifically, 100 to 2,000 $dm^3/h$.

The pellet compactor can comprise a die plate, a roll, and a cutter hub, where the roll functions to press the blended composition through die holes in the die plate, after which the cutter hub cuts the material as it is pressed through the holes to form the pellets. It is noted that different die plates can be used to produce pellets of varying size and shape. For example, the die holes can be circular to produce cylinders with a diameter of 0.5 to 5 millimeter (mm), specifically, 2.3 mm to 2.5 mm or can be rectangular with a length to width ratio of 1:10 to 10:1. The die plate can comprise die holes that are all the same size and shape or can comprise die holes with varying size and/or shape. It is further noted that the cutting rate of the cutter hub can be varied to result in pellets of differing height. For example, the resultant pellets can have a height of 1 to 30 mm. The pellet compactor can be one such those commercially available from CPM EUROPE BV.

The pellets can then be fed to a screener. The screener can be used to separate the pellets into varying size grades and/or to remove one or both of fines (pellets smaller than a minimum desired pellet size, for example, pellets with a length of less than 3 mm) and oversize pellets (pellets larger than a maximum desired pellet size, for example, pellets with a length of greater than 15 mm).

A product handling system can be responsible for packaging the produced pellets. The product handling system can comprise a product hopper, a fill station, a conveyer, a pallet loading station, a stretch wrapper, a labeler, or a combination thereof. The product hopper can comprise a product hopper vibrator system that can be used to avoid caverns and bridging generations and ultimately results in an increase in processing rates through the present process. The product hopper vibrator system can be, for example, an external pneumatic vibrator.

The pellets can be fed to the product handling system via a pellet feeder or can be fed via gravity. The pellets can be fed to a fill station that fills the pellets into product bags. The fill station can be one such as that provided by PAYPER BAGGING TECHNOLOGIES. The fill station can comprise a scale such that when a specified weight of pellets

have been introduced to a product bag, then the filling can be paused and a new product bag can be introduced. Likewise, the filling can be monitored by using a specified fill rate and time. The fill station can comprise a vibrating table located under the product bag that is being filled. The vibrating table facilitates the complete filling of the product bags and can be especially useful in promoting settling of the pellets and can be especially useful in filling bags with angles.

The filled bags can then be moved, for example, via a conveyer such as a conveyer belt or a roller conveyer, to a pallet loader that functions to move the filled bags onto a pallet. Once a full pallet is achieved, the full pallet can be moved to a stretch wrapper to wrap the pallet and to a labeler to label the wrapped pallet. The pallet can then be moved to a storage area.

The utilities system comprises a ventilation system for removing particles from the air and/or that accumulate on surfaces. The ventilation system can be running throughout the operation, during product change over, and/or as needed. For example, the room housing the present process can comprise an air ventilation system comprising a rotary enthalpy recovery system and blowers (such as a fresh air inlet blower and an exhaust air inlet blower). Likewise, vacuum hoods can be located throughout the room housing the present process and/or in areas of high particle generation (such as near one or more of a component feeder, a component discharger, a mixer, a pellet compactor, a screener, and a fill station) to pull air that comprises airborne particles into the ventilation system to, for example, an air filter. The rated ventilation for the room housing the present process can be 5 to 20, specifically, 8 to 12 air changes per hour. Furthermore, vacuum stations (such as a central vacuum station that can feed the vacuumed particles to a filter) can be provided for users to vacuum particles that have accumulated on surfaces. There can be at least 1, specifically, 1 to 10 vacuum stations.

The utilities system can regulate the temperature and/or the humidity. The temperature can be controlled such that temperature is 17 to 26°C. The temperature can be controlled such that the temperature is +/- 1°C of a set temperature, for example, 25°C +/-1°C or 18°C +/- 1°C. The humidity can be controlled such that the humidity is 40 to 64%.

FIG. 1 illustrates a process of making a product 1. The process comprises a feed and blend system 10, a pellet mill 20, a product handling system 30, and a utilities system 50. FIG. 1 illustrates that components, for example, the unquenched melt polycarbonate, the quenched melt polycarbonate, and optional additive can enter the feed and blend system 10 through one or more of component discharger 12, component feeder 14, or can be manually added through manual feeder 16. The components can be fed from the feeder(s) and/or discharger(s) to mixer 18 that mixes the components to form a quenched composition. The quenched composition then enters the pellet mill 20, where FIG. 1 illustrates the quenched composition entering pellet compactor 22 that forms the quenched composition into pellets. The pellets then enter the screener 24 to screen the pellets based on a specified size range to form a screened composition.

The screened composition then enters the product handling system 30, where FIG. 1 illustrates the screened composition entering filling station 32. Filling station 32 can directly fill bags produce big bag product bag 42. Likewise, filling station 32 can be a mobile filling station that can be moved to hopper bagger station 34. Hopper bagger station 34 can fill bags at bagger station 36 that can fill bags, place them onto a pallet, wrap, and label said pallet to form small bag product pallet 40.

The quenched composition can be prepared by mixing a mixture comprising the quenched polycarbonate and the unquenched polycarbonate. An additive with a reactive group can be added after a period of greater than or equal to 5 seconds, specifically, greater than or equal to, 1 minute, more specifically, greater than or equal to 5 minutes after starting of the mixing, wherein the reactive additive has a reactive $OH^-$ group or reactive ester group. If the mixing is performed in a horizontal extruder, then the reactive group can be added to the barrel immediately after addition of the quenched polycarbonate. For example, within 1 second or more of addition of the quenched polycarbonate. As used herein, when referring to "reactive" or a "reactive group", e.g., having a reactive $OH^-$ group or a reactive ester group, the reactivity is with respect to polycarbonate. Examples of additives with a reactive group include 2-(2H-benzotriazol-2-yl)-4-(1,1,3,3-tetramethylbutyl)-phenol (CYASORB™ 5411; Chemical Abstracts Service (CAS) No. 3147-75-9) and glycerol monostearate (CAS No. 123-94-4).

An additive can be added to the mixture such as a release agent, an antioxidant, an ultraviolet light (UV) stabilizing agent, a flame retardant, an anti-drip agent, an antistatic agent, a colorant, or a combination comprising one or more of the foregoing.

The additive can comprise an impact modifier, flow modifier, filler (e.g., a particulate polytetrafluoroethylene (PTFE), glass, carbon, mineral, or metal), reinforcing agent (e.g., glass fibers), antioxidant, heat stabilizer, light stabilizer, ultraviolet (UV) light stabilizer, UV absorbing additive, plasticizer, lubricant, release agent (such as a mold release agent), antistatic agent, anti-fog agent, antimicrobial agent, colorant (e.g. , a dye or pigment), surface effect additive, radiation stabilizer, flame retardant, anti-drip agent (e.g., a PTFE-encapsulated styrene-acrylonitrile copolymer (TSAN)), or a combination comprising one or more of the foregoing. For example, a combination of a heat stabilizer, mold release agent, and ultraviolet light stabilizer can be used. In general, the additives are used in the amounts generally known to be effective. For example, the total amount of the additive composition (other than any impact modifier, filler, or reinforcing agent) can be 0.001 to 10.0 wt%, or 0.01 to 5 wt%, each based on the total weight of the polycarbonate in the composition.

The release agent can comprise a polyethylene terephthalate (such as PET 3343 and PET 333), triacylglycerides

such as glycerol tristearate, monoacylglycerides such as glycerol monostearate; a poly-alpha olefin such as saturated poly(alpha) oligomer and saturated poly(1-decene) oligomer; linear low density polyethylene (LLDPE); acid esters such as dioctyl-4,5-epoxy-hexahydrophthalate; tris-(octoxycarbonylethyl)isocyanurate; epoxidized soybean oil; silicones, including silicone oils; esters, for example, fatty acid esters such as alkyl stearyl esters, e.g., methyl stearate, stearyl stearate, pentaerythritol tetrastearate, and the like; combinations of methyl stearate and hydrophilic and hydrophobic nonionic surfactants comprising polyethylene glycol polymers, polypropylene glycol polymers, poly(ethylene glycol-co-propylene glycol) copolymers, or a combination comprising at least one of the foregoing glycol polymers, e.g., methyl stearate and polyethylene-polypropylene glycol copolymer in a solvent; waxes such as beeswax, montan wax, and paraffin wax; triglycerides of the formula (A) shown below, and alkyl amides of the structures (B) and (C) shown below, alkyl amides comprising primary amides, the $C_{1-6}$ N-alkyl amides and the, $C_{1-6}$ secondary amides of; linear or branched $C_{12-36}$ alkyl carboxylic acids, erucic acid, stearic acid, oleic acid, linoleic acid, linolenic acid, myristic acid, palmitic acid, arachidonic acid, behenic acid, lignoceric acid and $C_{6-20}$ bis amides of $C_{2-6}$ alkylene diamines or a combination of at least one of the foregoing alkyl amides; and compositions of formulas (B) and (C)

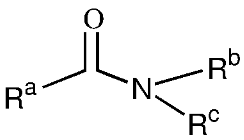
(B)

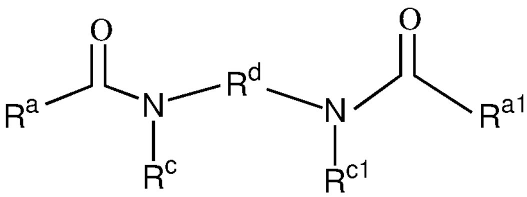
(C)

wherein $R^a$ or $R^{a1}$ are a $C_{1-30}$ alkyl group and $R^b$, $R^c$ and $R^{c1}$ are independently H or a $C_{1-30}$ alkyl group and $R^d$ is a $C_{2-6}$ alkyl group, or a combination comprising one or more of the foregoing. The release agent can comprise glycerol tristearate.

The antioxidant can comprise organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations including at least one of the foregoing antioxidants. Specifically, the antioxidant can comprise antioxidant 168, antioxidant 1076, or a combination comprising one or more of the foregoing.

The UV stabilizer can comprise 2-[2-hydroxy-3,5-di(1,1-dimethylbenzylphenyl)]-2H-benzotriazole; 2,2'-methylenebis(6-(2H-benzotriazol-2-yl)-4-(1,1,3,3-tetramethylbutyl)phenol); or pentaerythritol tetrakis(2-cyano-3,3-diphenylacrylate), 2-benzotriazolyl-4-tert-octylphenol, hydroxybenzophenones; hydroxybenzotriazoles; hydroxybenzotriazines; cyanoacrylates; oxanilides; benzoxazinones; 2-(2H-benzotriazol-2-yl)-4-(1,1,3,3-tetramethylbutyl)-phenol (CYASORB™ 5411); 2-hydroxy-4-n-octyloxybenzophenone (CYASORB™ 531); 2-[4,6-bis(2,4-dimethylphenyl)-1,3,5-triazin-2-yl]- 5-(octyloxy)-phenol (CYASORB™ 1164); 2,2'-(1,4- phenylene)bis(4H-3,1-benzoxazin-4-one) (CYASORB™ UV-3638); 1,3-bis[(2-cyano-3,3-diphenylacryloyl)oxy]-2,2-bis[[(2-cyano-3, 3-diphenylacryloyl)oxy]methyl]propane (UVINUL™ 3030); 2,2'-(1,4-phenylene) bis(4H-3,1-benzoxazin-4-one); 1,3-bis[(2-cyano-3,3-diphenylacryloyl)oxy]-2,2-bis[[(2-cyano-3,3-diphenylacryloyl)oxy]methyl]propane; 2-(2'- hydroxy -5'-tert-octylphenyl)benzotriazole; nano-size inorganic materials such as titanium oxide, cerium oxide, and zinc oxide, all with particle size less than 100 nanometers; or the like, or combinations including at least one of the foregoing UV stabilizers. Specifically, the UV stabilizer can comprise ultraviolet 5411, ultraviolet 3638, ultraviolet 360, ultraviolet 234, or a combination comprising one or more of the foregoing.

The flame retardant can comprise a siloxane or a siloxane copolymer, a perfluoroalkyl sulfonate salt (such as salts of $C_{2-16}$ alkyl sulfonate salts such as potassium perfluorobutane sulfonate (Rimar salt), potassium perfluoroctane sulfonate, and tetraethylammonium perfluorohexane sulfonate), an aromatic phosphate ester, or a combination comprising one or more of the foregoing.

The aromatic esters of the formula $(GO)_3P=O$, wherein each G is independently an alkyl, cycloalkyl, aryl, alkaryl, or aralkyl group, provided that at least one G is an aromatic group. Two of the G groups can be joined together to provide a cyclic group, for example, diphenyl pentaerythritol diphosphate, which is described by Axelrod in U.S. Pat. No. 4,154,775. Other suitable aromatic phosphates can be, for example, phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, p-tolyl bis(2,5,5'-trimethylhexyl) phosphate, 2-ethylhexyl diphenyl phosphate, or the like. A specific aromatic phosphate is one in which each G is aromatic, for example, triphenyl phosphate, tricresyl phosphate, isopropylated triphenyl phosphate, and the like.

Di- or polyfunctional aromatic phosphorus-containing compounds are also useful, for example, compounds of the formulas below:

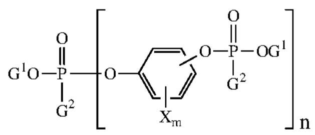

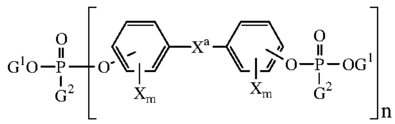

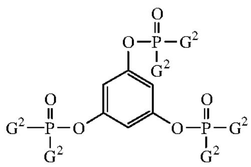

wherein each $G^1$ is independently a $C_{1-30}$ hydrocarbon; each $G^2$ is independently a $C_{1-30}$ hydrocarbon or hydrocarbonoxy; each $X^a$ is as defined above; each X is independently a hydrogen; m is 0 to 4, and n is 1 to 30. Examples of suitable di- or polyfunctional aromatic phosphorus-containing compounds include resorcinol tetraphenyl diphosphate (RDP), the bis(diphenyl) phosphate of hydroquinone and the bis(diphenyl) phosphate of bisphenol-A, respectively, their oligomeric and polymeric counterparts, and the like.

The siloxane copolymer can comprise a polycarbonate-polysiloxane copolymer comprises polycarbonate blocks and polydiorganosiloxane blocks. The polycarbonate blocks can be derived from reaction of a dihydroxy compound such as bisphenol A. The polydiorganosiloxane blocks comprise repeating structural units of formula (17) (sometimes referred to herein as 'siloxane'):

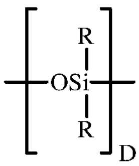 (17)

wherein each occurrence of R is same or different, and is a $C_{1-13}$ monovalent organic radical. For example, R can be a $C_{1-13}$ alkyl group, $C_{1-13}$ alkoxy group, $C_{2-13}$ alkenyl group, $C_{2-13}$ alkenyloxy group, $C_{3-6}$ cycloalkyl group, $C_{3-6}$ cycloalkoxy group, $C_{6-10}$ aryl group, $C_{6-10}$ aryloxy group, $C_{7-13}$ aralkyl group, $C_{7-13}$ aralkoxy group, $C_{7-13}$ alkaryl group, or $C_{7-13}$ alkaryloxy group. Combinations of the foregoing R groups can be used in the same copolymer.

"Polycarbonate" as used herein means a polymer or copolymer having repeating structural carbonate units of formula (1)

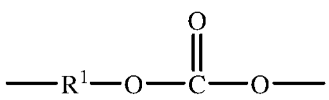 (1)

wherein at least 60 percent of the total number of $R^1$ groups are aromatic, or each $R^1$ contains at least one $C_{6-30}$ aromatic group. Specifically, each $R^1$ can be derived from a dihydroxy compound such as an aromatic dihydroxy compound of formula (2) or a bisphenol of formula (3).

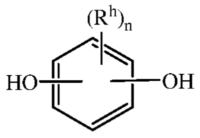 (2)

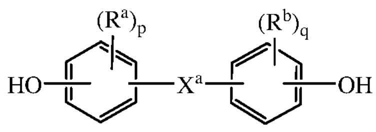 (3)

In formula (2), each $R^h$ is independently a halogen atom, for example, bromine, a $C_{1-10}$ hydrocarbyl group such as a $C_{1-10}$ alkyl, a halogen-substituted $C_{1-10}$ alkyl, a $C_{6-10}$ aryl, or a halogen-substituted $C_{6-10}$ aryl, and n is 0 to 4.

In formula (3), $R^a$ and $R^b$ are each independently a halogen, $C_{1-12}$ alkoxy, or $C_{1-12}$ alkyl; and p and q are each independently integers of 0 to 4, such that when p or q is less than 4, the valence of each carbon of the ring is filled by hydrogen. Accordingly, p and q can each be 0, or p and q can each be 1, and $R^a$ and $R^b$ can each be a $C_{1-3}$ alkyl group, specifically methyl, disposed meta to the hydroxy group on each arylene group. $X^a$ is a bridging group connecting the two hydroxy-substituted aromatic groups, where the bridging group and the hydroxy substituent of each $C_6$ arylene group are disposed ortho, meta, or para (specifically para) to each other on the $C_6$ arylene group, for example, a single bond, -O-, -S-, -S(O)-, - $S(O)_2$-, -C(O)-, or a $C_{1-18}$ organic group, which can be cyclic or acyclic, aromatic or non-aromatic, and can further comprise heteroatoms such as halogens, oxygen, nitrogen, sulfur, silicon, or phosphorous. For example, $X^a$ can be a substituted or unsubstituted $C_{3-18}$ cycloalkylidene; a $C_{1-25}$ alkylidene of the formula $-C(R^c)(R^d)-$ wherein $R^c$ and $R^d$ are each independently hydrogen, $C_{1-12}$ alkyl, $C_{1-12}$ cycloalkyl, $C_{7-12}$ arylalkyl, $C_{1-12}$ heteroalkyl, or cyclic $C_{7-12}$ heteroarylalkyl; or a group of the formula $-C(=R^e)-$ wherein $R^e$ is a divalent $C_{1-12}$ hydrocarbon group.

Some illustrative examples of specific dihydroxy compounds include the following: bisphenol compounds such as 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha,alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole; resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like.

Specific dihydroxy compounds include resorcinol, 2,2-bis(4-hydroxyphenyl) propane ("bisphenol A" or "BPA", in which in which each of $A^1$ and $A^2$ is p-phenylene and $Y^1$ is isopropylidene in formula (3)), 3,3-bis(4-hydroxyphenyl) phthalimidine, 2-phenyl-3,3'-bis(4-hydroxyphenyl) phthalimidine (also known as N-phenyl phenolphthalein bisphenol, "PPPBP", or 3,3-bis(4-hydroxyphenyl)-2-phenylisoindolin-1-one), 1,1-bis(4-hydroxy-3-methylphenyl)cyclohexane (DMBPC), and from bisphenol A and 1,1-bis(4-hydroxy-3-methylphenyl)-3,3,5-trimethylcyclohexane (isophorone bisphenol).

The polycarbonate can be a linear homopolymer containing bisphenol A carbonate units (BPA-PC); or a branched, cyanophenyl end-capped BPA-PC.

The polycarbonate can be a copolycarbonate. Specific copolycarbonates include those derived from bisphenol A and bulky bisphenol carbonate units, i.e., derived from bisphenols containing at least 12 carbon atoms, for example, 12 to 60 carbon atoms, specifically, 20 to 40 carbon atoms. Examples of such copolycarbonates include copolycarbonates comprising bisphenol A carbonate units and 2-phenyl-3,3'-bis(4-hydroxyphenyl) phthalimidine carbonate units (a BPA-PPPBP copolymer), a copolymer comprising bisphenol A carbonate units and 1,1-bis(4-hydroxy-3-methylphenyl)cyclohexane carbonate units (a BPA-DMBPC copolymer), and a copolymer comprising bisphenol A carbonate units and isophorone bisphenol carbonate units (available, for example, under the trade name APEC from Bayer).

The molecular weight of the quenched melt polycarbonate and the unquenched polycarbonate each independently can be 10,000 to 50,000 Daltons, specifically, 10,000 to 25,000 Daltons, more specifically, 13,000 to 18,500 Daltons based on polycarbonate standards. The quenched melt polycarbonate and the unquenched polycarbonate can each independently have an endcapping level of greater than or equal to 60 mol%, more specifically, greater than or equal to 80 mol%, more specifically, greater than or equal to 90 mol% wherein the endcapping is the molar ratio in percent of phenolic end groups based on the total moles of end groups. Specifically, the endcapping ratio in percent (%EC) is determined by the following equation:

$$\%EC = 100 - \left(\frac{ppmOH + Mn}{340{,}000}\right)$$

wherein ppm OH is the amount of hydroxyl end groups in ppm and Mn is the number averaged molecular weight based on polycarbonate standards in Daltons. The ppm OH can be determined by Fourier Transform Infrared Spectroscopy (FTIR), for example, on a Perkin Elmer FTIR Spectrum One Device by dissolving 0.5 grams (g) of the polycarbonate sample in 25 milliliters (mL) of dried chloroform, measuring the absorbance at a wavelength of 3,584 inverse centimeters ($cm^{-1}$) using a univariable calibration, and normalizing the absorbance by dividing the absorbance by the absorbance at 2,779 $cm^{-1}$.

The melt flow rate of the quenched melt polycarbonate and the unquenched polycarbonate each independently can be less than or equal to 40 grams per 10 minutes (g/10 min), specifically, less than or equal to 10 g/10 min as determined by ASTM D1238-04 at 250°C, 1.5 kilograms (kg). One of the quenched melt polycarbonate and the unquenched melt polycarbonate can be a high viscosity polycarbonate and the other can be a low viscosity polycarbonate. The low viscosity polycarbonate can have a melt flow rate of greater than or equal to 10 g/10 min, specifically, greater than or equal to 15 g/10 min, more specifically, greater than or equal to 20 g/10 min, measured at 300°C/1.5 kg according to ASTM D1238-04 or ISO 1133. The high viscosity polycarbonate can have a melt flow rate of less than or equal to 8 g/10 min, specifically, less than or equal to 6 g/10 min measured at 300°C/1.5 kg according to ASTM D1238-04 or ISO 1133.

The polycarbonate is prepared by a melt polymerization process, by co-reacting, in a molten state, monomers such as a dihydroxy reactant and a carbonate compound, such as phosgene or a diaryl carbonate (such as diphenyl carbonate or an ester substituted diaryl carbonate). The melt polymerization process can be a batch or a continuous melt process. In either case, the melt polymerization conditions used can comprise two or more distinct reaction stages, for example, a first reaction stage in which the starting aromatic dihydroxy compound and diaryl carbonate are converted into an oligomeric polycarbonate and a second reaction stage wherein the oligomeric polycarbonate formed in the first reaction stage is converted to high molecular weight polycarbonate. Such "staged" polymerization reaction conditions are especially suitable for use in continuous polymerization systems wherein the starting monomers are oligomerized in a first reaction vessel and the oligomeric polycarbonate formed therein is continuously transferred to one or more downstream reactors in which the oligomeric polycarbonate is converted to high molecular weight polycarbonate. Typically, in the oligomerization stage the oligomeric polycarbonate produced has a number average molecular weight (Mn) of 1,000 to 7,500 Daltons (using polycarbonate standard) or a weight average molecular weight (Mw) of less than or equal to 25,000 Daltons. In one or more subsequent polymerization stages, the number average molecular weight of the polycarbonate can be increased to, for example, 8,000 to 25,000 Daltons (using polycarbonate standard) or polycarbonate to a weight average molecular weight (Mw) of, for example, 25,000 to 140,000 Daltons (using polystyrene standards.

The term "melt polymerization conditions" is understood to mean those conditions necessary to affect reaction between a dihydroxy compound and a carbonate compound in the presence of a transesterification catalyst. Although, solvents are generally not used in the process, and the reactants aromatic dihydroxy compound and the carbonate compound are in a molten state, the dihydroxy compound and/or the carbonate compound can be added to the polymerization unit as a solvent mixture, such as a mixture with acetone. The reaction temperature can be 100 to 350°C, specifically, 180 to 310°C. The pressure can be at atmospheric pressure, supra-atmospheric pressure, or a range of pressures from atmospheric pressure to 15 torr in the initial stages of the reaction, and at a reduced pressure at later stages, for example, 0.2 to 15 torr. The reaction time is generally 0.1 hours to 10 hours.

The diaryl carbonate used in the melt polymerization of the quenched melt polycarbonate and the unquenched melt polycarbonate can each independently comprise a metal compound. The metal compound can comprise less than or equal to 500 parts per billion by weight (ppb), specifically, less than or equal to 33 ppb of molybdenum, more specifically, less than or equal to 23 ppb of molybdenum; less than or equal to 38 ppb, specifically, less than or equal to 23 ppb vanadium; less than or equal to 38 ppb, specifically, less than or equal to 23 ppb chromium; less than or equal to 85 ppb, specifically, less than or equal to 57 ppb titanium; less than or equal to 425 ppb, specifically, less than or equal to 284 ppb of niobium; less than or equal to 38 ppb, specifically, less than or equal to 23 ppb of nickel; less than or equal

to 750 ppb, specifically, less than or equal to 500 ppb, and even less than or equal to 200 ppb zirconium, for example, less than or equal to 12 ppb, specifically, less than or equal to 6 ppb zirconium; and less than or equal to 12 ppb, specifically, less than or equal to 6 ppb of iron, all based on the total weight of the diaryl carbonate and the metal compound.

A transesterification catalyst(s) can be employed in the polymerization. The transesterification catalyst can comprise an alkali catalyst and an optional quaternary catalyst. The quaternary catalyst comprises one or both of a quaternary ammonium compound and a quaternary phosphonium compound. The alkali catalyst comprises a source of one or both of an alkali ion and an alkaline earth metal ion.

The quaternary ammonium compound can be a compound of the structure $(R^4)_4N^+X^-$, wherein each $R^4$ is the same or different, and is a $C_{1-20}$ alkyl, a $C_{4-20}$ cycloalkyl, or a $C_{4-20}$ aryl; and $X^-$ is an organic or inorganic anion, for example, a hydroxide, halide, carboxylate, sulfonate, sulfate, formate, carbonate, or bicarbonate. Examples of organic quaternary ammonium compounds include tetramethyl ammonium hydroxide, tetrabutyl ammonium hydroxide, tetramethyl ammonium acetate, tetramethyl ammonium formate, tetrabutyl ammonium acetate, and combinations comprising at least one of the foregoing.

The quaternary phosphonium compound can be a compound of the structure $(R^5)_4P^+X^-$, wherein each $R^5$ is the same or different, and is a $C_{1-20}$ alkyl, a $C_{4-20}$ cycloalkyl, or a $C_{4-20}$ aryl; and $X^-$ is an organic or inorganic anion, for example, a hydroxide, phenoxide, halide, carboxylate such as acetate or formate, sulfonate, sulfate, formate, carbonate, or bicarbonate. Where $X^-$ is a polyvalent anion such as carbonate or sulfate, it is understood that the positive and negative charges in the quaternary ammonium and phosphonium structures are properly balanced. For example, where $R^{20}$ to $R^{23}$ are each methyls and $X^-$ is carbonate, it is understood that $X^-$ represents $2(CO_3^{-2})$.

Examples of organic quaternary phosphonium compounds include tetramethyl phosphonium hydroxide, tetramethyl phosphonium acetate, tetramethyl phosphonium formate, tetrabutyl phosphonium hydroxide, tetraethyl phosphonium acetate, tetrapropyl phosphonium acetate, tetrabutyl phosphonium acetate, tetrapentyl phosphonium acetate, tetrahexyl phosphonium acetate, tetraheptyl phosphonium acetate, tetraoctyl phosphonium acetate, tetradecyl phosphonium acetate, tetradodecyl phosphonium acetate, tetratolyl phosphonium acetate, tetramethyl phosphonium benzoate, tetraethyl phosphonium benzoate, tetrapropyl phosphonium benzoate, tetraphenyl phosphonium benzoate, tetraethyl phosphonium formate, tetrapropyl phosphonium formate, tetraphenyl phosphonium formate, tetramethyl phosphonium propionate, tetraethyl phosphonium propionate, tetrapropyl phosphonium propionate, tetramethyl phosphonium butyrate, tetraethyl phosphonium butyrate, tetrapropyl phosphonium butyrate, tetraphenyl phosphonium acetate, tetraphenyl phosphonium phenoxide, and combinations comprising at least one of the foregoing. The amount of quaternary catalyst employed is typically based upon the total number of moles of dihydroxy compound employed in the polymerization reaction. When referring to the ratio of quaternary catalyst, for example, phosphonium salt, to all dihydroxy compounds employed in the polymerization reaction, it is convenient to refer to moles of phosphonium salt per mole of the dihydroxy compound(s), meaning the number of moles of phosphonium salt divided by the sum of the moles of each individual dihydroxy compound present in the reaction mixture. The amount of quaternary catalyst (e.g., organic ammonium or phosphonium salts) employed typically will be $1 \times 10^{-2}$ to $1 \times 10^{-5}$, specifically, $1 \times 10^{-3}$ to $1 \times 10^{-4}$ moles per total mole of the dihydroxy compounds in the reaction mixture.

The alkali catalyst comprises a source of one or both of alkali ions or alkaline earth ions. The sources of these ions include alkaline earth hydroxides such as magnesium hydroxide and calcium hydroxide. Sources of alkali metal ions can include the alkali metal hydroxides such as illustrated by lithium hydroxide, sodium hydroxide, potassium hydroxide, and combinations comprising at least one of the foregoing. Examples of alkaline earth metal hydroxides are calcium hydroxide, magnesium hydroxide, and combinations comprising at least one of the foregoing. The alkali catalyst can comprise sodium hydroxide. The alkali catalyst typically will be used in an amount sufficient to provide $1 \times 10^{-2}$ to $1 \times 10^{-8}$ moles, specifically, $1 \times 10^{-4}$ to $1 \times 10^{-7}$ moles of metal hydroxide per mole of the dihydroxy compounds employed. Other possible sources of alkaline earth and alkali metal ions include salts of carboxylic acids (such as sodium acetate) and derivatives of ethylene diamine tetraacetic acid (EDTA) (such as EDTA tetrasodium salt, and EDTA magnesium disodium salt), as well as combinations comprising at least one of the foregoing. For example, the alkali catalyst can comprise alkali metal salt(s) of a carboxylic acid, alkaline earth metal salt(s) of a carboxylic acid, or a combination comprising at least one of the foregoing. In another example, the alkali catalyst comprises $Na_2Mg$ EDTA or a salt thereof.

The alkali catalyst can also, or alternatively, comprise salt(s) of a non-volatile inorganic acid. For example, the alkali catalyst can comprise salt(s) of a non-volatile inorganic acid such as $NaH_2PO_3$, $NaH_2PO_4$, $Na_2HPO_3$, $NaHCO_3$, $Na_2CO_3$, $KH_2PO_4$, $CsH_2PO_4$, $Cs_2HPO_4$, $Cs_2CO_3$, and combinations comprising at least one of the foregoing. Alternatively, or in addition, the alkali catalyst can comprise mixed alkali metal salt(s) of phosphoric acid, such as $NaKHPO_4$, $CsNaHPO_4$, $CsKHPO_4$, and combinations comprising at least one of the foregoing.

The alkali catalyst can comprise an alkali metal compound, wherein if the metal compound comprises sodium sulfate, the amount of sodium can be less than or equal to 1,690 ppm, specifically, less than or equal to 1,670 ppm based on the total weight of the catalyst compound; if the metal compound comprises cesium sulfate, the amount of cesium can be less than or equal to 275 ppm, specifically, less than or equal to 252 ppm based on the total weight of the catalyst compound; if the metal compound comprises sodium hydroxide, the amount of sodium can be less than or

equal to 35 ppm, specifically, less than or equal to 29 ppm based on the total weight of the catalyst compound; if the metal compound comprises potassium hydroxide, the amount of potassium can be less than or equal to 50 ppm, specifically, less than or equal to 43 ppm based on the total weight of the catalyst compound; if the metal compound comprises cesium hydroxide, the amount of cesium can be less than or equal to 140 ppm, specifically, less than or equal to 132 ppm based on the total weight of the respective catalyst; or a combination comprising one or more of the foregoing.

The alkali catalyst can comprise an alkali metal compound, wherein the amount of sodium can be greater than or equal to 1 ppm, or greater than or equal to 30 ppm, or greater than or equal to 100 ppm; the amount of cesium can be greater than or equal to 10 ppm, or greater than or equal to 30 ppm, or greater than or equal to 50 ppm; the amount of potassium can be greater than 0 ppm, or greater than or equal to 5 ppm, or greater than or equal to 10 ppm; or a combination comprising one or more of the foregoing, wherein the metal amounts are based on the weight of the catalyst.

Branched polycarbonate can be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents can be added at a level of 0.05 to 2.0 wt% based on the total weight of the dihydroxy compound. Mixtures comprising linear polycarbonates and branched polycarbonates can be used. The content of the following branching structures can be less than or equal to 2,000 ppm.

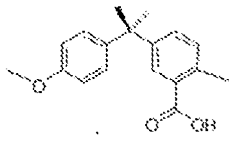
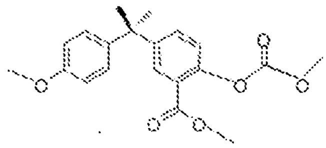
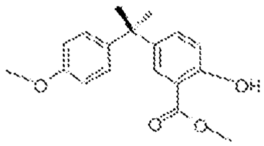

The branching agent can be introduced in an amount such that it will result in a polycarbonate comprising up to 1.5 mole percent (mol%), specifically, up to 1.0 mol%, more specifically, up to 0.5 mol% branching agent in the final branched polycarbonate based on the total moles of repeat units in the polycarbonate. The amount of dissolved branching agent present in the solution can be an amount of 0.5 to 50 wt%, specifically, 5 to 40 wt%, more specifically, 15 to 35 wt% relative to the total weight of the branching agent and solvent solution. The polymerized polycarbonate can comprise a branching agent in the amount of 100 to 5,000 ppm, specifically, 500 to 4,000 ppm, more specifically, 1,000 to 3,500 ppm based on the total weight of polycarbonate.

A chainstopper can be introduced to the polymerization unit. The chainstopper can be, for example, a monofunctional phenol.

The quenched polycarbonate comprises a quencher that was added during the melt polymerization, for example, to a finishing extruder to reduce the activity of the catalyst. Quenching agents include boric acid esters (e.g., $B(OCH_3)_3$, $B(OCH_2CH_3)_3$, and $B(OC_6H_6)_3$, zinc borate, boron phosphate, aluminum stearate, aluminum silicate, zirconium carbonate, zirconium $C_{1-12}$ alkoxides, zirconium hydroxycarboxylates, gallium phosphide, gallium antimonide, germanium oxide, $C_{1-32}$ organogermanium compounds, $C_{4-32}$ tetraorganotin tin compound, $C_{6-32}$ hexaorganotin compound (e.g., $[(C_6H_6O)Sn(CH_2CH_2CH_2CH_3)_2]_2O)$, $Sb_2O_3$, antimony oxide, $C_{1-32}$ alkylantimony, bismuth oxide, $C_{1-12}$ alkylbismuth, zinc acetate, zinc stearate, $C_{1-32}$ alkoxytitanium, and titanium oxide, phosphoric acid, phosphorous acid, hypophosphorous acid, pyrophosphoric acid, polyphosphoric acid, boric acid, hydrochloric acid, hydrobromic acid, sulfuric acid, sulfurous acid, adipic acid, azelaic acid, dodecanoic acid, L-ascorbic acid, aspartic acid, benzoic acid, formic acid, acetic acid, citric acid, glutamic acid, salicylic acid, nicotinic acid, fumaric acid, maleic acid, oxalic acid, benzenesulfinic acid, $C_{1-12}$ dialkyl sulfates (e.g., dimethyl sulfate and dibutyl sulfate), alkyl sulfonic esters of the formula $R_1SO_3R_2$ wherein $R_1$ is hydrogen, $C_{1-12}$ alkyl, $C_{6-18}$ aryl, or $C_{7-19}$ alkylaryl, and $R_2$ is $C_{1-12}$ alkyl, $C_{6-18}$ aryl, or $C_{7-19}$ alkylaryl (e.g., benzenesulfonate, p-toluenesulfonate, methylbenzene sulfonate, ethylbenzene sulfonate, n-butyl benzenesulfonate, octyl benzenesulfonate and phenyl benzenesulfonate, methyl p-toluenesulfonate, ethyl p-toluenesulfonate, n-butyl p-toluene sulfonate, octyl p-toluenesulfonate and phenyl p-toluenesulfonate, in particular alkyl tosylates such as n-butyl tosylate), sulfonic acid phosphonium salts of the formula $(R^aSO_3^-)(PR^b_4)^+$ wherein $R^a$ is hydrogen, $C_{1-12}$ alkyl, $C_{6-18}$ aryl, or $C_{7-19}$ alkylaryl, and each $R^b$ is independently hydrogen, $C_{1-12}$ alkyl or $C_{6-18}$ aryl, sulfonic acid derivatives of the formula $A^1-(Y^1-SO_3X^1)_m$ wherein $A^1$ is a $C_{1-40}$ hydrocarbon group having a valence of m, $Y^1$ is a single bond or an oxygen atom, $X^1$ is a secondary or tertiary alkyl group of the formula $-CR^{15}R^{16}R^{17}$, a metal cation of one equivalent, an ammonium cation (e.g, $NR^b{}_3{}^+$ wherein each $R^b$ is independently hydrogen, $C_{1-12}$ alkyl or $C_{6-18}$ aryl), or a phosphonium (e.g, $PR^b{}_4{}^+$ wherein each $R^b$ is independently hydrogen, $C_{1-12}$ alkyl or $C_{6-18}$ aryl) wherein $R^{15}$ is a hydrogen atom or an alkyl group having 1 to 5 carbon atoms, $R^{16}$ is a hydrogen atom, a phenyl group or an alky group having 1 to 5 carbon atoms, and $R^{17}$ is the same as or different from $R^{15}$ and has the same definition as $R^{15}$, provided that two of $R^{15}$, $R^{16}$, and $R^{17}$

cannot be hydrogen atoms, and m is an integer of 1 to 4, provided that when $Y^1$ is a single bond, all of $X^1$ in an amount of m cannot be metal cations of one equivalent, a compound of the formula $^+X^2\text{-}A^2\text{-}Y^1\text{-}SO_3^-$ wherein $A^2$ is a divalent hydrocarbon group, $^+X^2$ is a secondary, tertiary or quaternary ammonium cation or a secondary (e.g., tertiary or quaternary phosphonium cation, and $Y^1$ is a single bond or an oxygen atom, a compound of the formula $A^3\text{-}(^+X^3)_n\cdot(R\text{-}Y^1\text{-}SO_3^-)_n$ wherein $A^3$ is a $C_{1-40}$ hydrocarbon group having a valence of n, $^+X^3$ is a secondary, tertiary or quaternary ammonium cation (e.g., $NR^b{}_3{}^+$ wherein each $R^b$ is independently hydrogen, $C_{1-12}$ alkyl or $C_{6-18}$ aryl), or a secondary, tertiary or quaternary phosphonium cation (e.g., $PR^b{}_4{}^+$ wherein each $R^b$ is independently hydrogen, $C_{1-12}$ alkyl or $C_{6-18}$ aryl), R is a monovalent $C_{1-40}$ hydrocarbon group, n is an integer of 2 to 4, and $Y^1$ is a single bond or an oxygen atom, a compound of the formula $A^5\text{-}Ad^1\text{-}A^4\text{-}(Ad^2\text{-}A^5)_\ell$ wherein $A^5$ is a monovalent or divalent $C_{1-40}$ hydrocarbon group, $A^4$ is a divalent $C_{1-40}$ hydrocarbon group, each of $Ad^1$ and $Ad^2$ is independently an acid anhydride group selected from $-SO_2\text{-}O\text{-}SO_2-$, $-SO_2\text{-}O\text{-}CO-$ and $-CO\text{-}O\text{-}SO_2-$, and $\ell$, is 0 or 1, provided that when $\ell$ is O, $-(Ad^2\text{-}A^5)_\ell$ is a hydrogen atom or a bond between $A^4$ and $A^5$, in which $A^5$ is a divalent hydrocarbon group or a single bond, aminosulfonic esters having the formula $R_aR_bN\text{-}A\text{-}SO_3R_c$ wherein $R_a$ and $R^b$ are each independently hydrogen, $C_{1-12}$ alkyl, $C_{6-22}$ aryl, $C_{7-19}$ alkylaryl or $R_a$ and $R_b$, either singly or in combination, form an aromatic or non-aromatic heterocyclic compound with N (e.g., pyrrolyl, pyridinyl, pyrimidyl, pyrazinyl, carbazolyl, quinolinyl, imidazoyl, piperazinyl, oxazolyl, thiazolyl, pyrazolyl, pyrrolinyl, indolyl, purinyl, pyrrolydinyl, or the like), $R_c$ is hydrogen, and A is $C_{1-12}$ alkyl, $C_{6-18}$ aryl, or $C_{17-19}$ alkylaryl (e.g., compounds such as N-(2-hydroxyethyl) piperazine-N'-3-propanesulfonic acid, 1,4,-piperazinebis (ethanesulfonic acid), and 5-dimethylamino-1-napthalenesulfonic acid), ammonium sulfonic esters of the formula $R_aR_bR_cN^+\text{-}A\text{-}SO_3^-$, wherein $R_a$, $R_b$, are each independently hydrogen, $C_{1-12}$ alkyl, $C_{1-12}$ aryl, $C_{7-19}$ alkylaryl, or $R_a$ and $R_b$, either singly or in combination, form an aromatic or non-aromatic heterocyclic compound with N (e.g., pyrrolyl, pyridinyl, pyrimidyl, pyrazinyl, carbazolyl, quinolinyl, imidazoyl, piperazinyl, oxazolyl, thiazolyl, pyrazolyl, pyrrolinyl, indolyl, purinyl, pyrrolydinyl, or the like), $R_c$ is a hydrogen, and A is $C_{1-12}$ alkyl, $C_{6-18}$ aryl, or $C_{7-19}$ alkylaryl, sulfonated polystyrene, methyl acrylate-sulfonated styrene copolymer, and combinations comprising at least one of the foregoing. Quenching agents can include a combination of compounds, for example, an alkyl tosylate such as n-butyl tosylate and phosphorus acid.

The unquenched polycarbonate can be a polycarbonate that was polymerized in the absence of a quencher. The unquenched polycarbonate can be free of the above-mentioned quenchers. The unquenched polycarbonate comprises less than 1 ppm, for example, less than or equal to 0.5 ppm, or less than or equal to 0.1 ppm, or less than or equal to 0.01 ppm, or less than or equal to 0.001 ppm, of the foregoing quenching agents based on the weight of the unquenched polycarbonate.

The above process of quenching an unquenched polycarbonate is further described in the below embodiments.

Embodiment 1: A process for forming a quenched composition as defined in claim 1 comprises: mixing an unquenched melt polycarbonate and a quenched melt polycarbonate to form the quenched composition; wherein the quenched polycarbonate was formed from a first melt polymerization, wherein the first melt polymerization comprises adding a quencher to form the quenched polycarbonate, wherein the unquenched polycarbonate was formed from a second melt polymerization.

Embodiment 2: A process for forming a quenched composition comprises: mixing 40 to 95 wt% or 80 to 95 wt% of an unquenched melt polycarbonate and 5 to 20 wt% or 5 to 60 wt% of a quenched melt polycarbonate to form the quenched composition, wherein the weight percentage is based upon a total weight of the quenched composition; wherein the quenched polycarbonate was formed from a first melt polymerization, wherein the first melt polymerization comprises adding a quencher to form the quenched polycarbonate, wherein the quenched melt polycarbonate comprises greater than or equal to 0.5 ppm of free quencher; wherein the unquenched polycarbonate was formed from a second melt polymerization, wherein the unquenched melt polycarbonate comprises active catalyst used during the second melt polymerization, and wherein the second melt polymerization adds no quencher to the unquenched melt polycarbonate.

Embodiment 3: The process of the preceding embodiments, wherein the quenched melt polycarbonate is free of an additive with a reactive OH group, where reactivity is with respect to the quenched melt polycarbonate and the unquenched melt polycarbonate.

Embodiment 4: The process of Embodiment 3, wherein the quenched melt polycarbonate consists essentially of the melt polymerized polycarbonate, catalyst, the quencher, and optionally one or more of unreacted monomer, phenol, and ester-substituted phenol.

Embodiment 5: The process of Embodiment 4, wherein the quenched melt polycarbonate consists of the melt polymerized polycarbonate, catalyst, the quencher, and optionally one or more of unreacted monomer, phenol, and ester-substituted phenol.

Embodiment 6: The process of any of the preceding embodiments, further comprising adding an additive with a reactive group after greater than or equal to 5 seconds of starting the mixing, or greater than or equal to 30 seconds of starting the mixing, or greater than or equal to 60 seconds or greater than or equal to 5 minutes of starting the mixing; or if the mixing is performed in a horizontal extruder, then the process can comprise adding the additive with

the reactive group barrel within 1 second after addition of the quenched polycarbonate; wherein the additive with a reactive group can optionally comprise UV5411, glycerol monostearate, or a combination comprising one or both of the foregoing; wherein the process optionally further comprises adding pentaerythritol tetrastearate (PETS) at any time, for example, prior to and/or during mixing.

Embodiment 7: The process of any of the preceding embodiments, further comprising receiving a first shipment of the quenched polycarbonate from a first source.

Embodiment 8: The process of Embodiment 7, further comprising receiving a second shipment of the unquenched polycarbonate from a second source, wherein the second source is different than the first source.

Embodiment 9: The process of any of the preceding embodiments, wherein one of the quenched polycarbonate and the unquenched polycarbonate has a melt flow rate of greater than or equal to 10 g/10 min and the other has a melt flow rate of less than or equal to 8 g/10 min as determined by ASTM D1238-04 at 250°C, 1.5 kilograms (kg)..

Embodiment 10: The process of any of the preceding embodiments, wherein one or both of the quenched melt polycarbonate and the unquenched melt polycarbonate was derived from a diaryl carbonate comprising a metal compound, wherein the metal compound comprises less than or equal to 500 ppb of molybdenum based on the total parts of the diaryl carbonate and the metal compound; less than or equal to 33 ppb of vanadium based on the total parts of the diaryl carbonate and the metal compound; less than or equal to 33 ppb of chromium based on the total parts of the diaryl carbonate and the metal compound; less than or equal to 75 ppb of titanium based on the total parts of the diaryl carbonate and the metal compound; less than or equal to 375 ppb of niobium based on the total parts of the diaryl carbonate and the metal compound; less than or equal to 33 ppb of nickel based on the total parts of the diaryl carbonate and the metal compound; less than or equal to 10 ppb of zirconium based on the total parts of the diaryl carbonate and the metal compound; and less or equal to 10 ppb iron based on the total parts of the diaryl carbonate and the metal compound.

Embodiment 11: The process of any of the preceding embodiments, wherein the quenched polycarbonate comprises 0.5 to 20 ppm or 1 ppm to 20 ppm of free quencher based on the total weight of the quenched polycarbonate.

Embodiment 12: The process of any of the preceding embodiments, wherein the mixture comprises 5 to 10 wt% of the quenched melt polycarbonate based on the total weight of the mixture.

Embodiment 13: The process of any of the preceding embodiments, wherein the unquenched polycarbonate comprises greater than or equal to 10 wt% active catalyst, based upon a total weight of catalyst used during second melt polymerization, and wherein less than 1 ppm quencher has been added during second melt polymerization.

Embodiment 14: The process of any of the preceding embodiments, wherein the unquenched polycarbonate comprises 0 ppm of a quencher.

Embodiment 15: The process of any of the preceding embodiments, wherein the mixing occurs for less than or equal to 5 minutes.

Embodiment 16: The process of any of the preceding embodiments, wherein the mixing does not melt a component with a melting temperature of 60°C.

Embodiment 17: The process of any of the preceding embodiments, wherein the mixing occurs at a tipspeed of 1 to 5 m/s.

Embodiment 18: The process of any of the preceding embodiments, wherein the mixing occurs in a double shaft mixer rotating in opposite directions.

Embodiment 19: The process of any of the preceding embodiments, wherein the unquenched melt polycarbonate and the quenched melt polycarbonate are each independently added via a feeder, a discharger, or a manual fill station.

Embodiment 20: The process of any of the preceding embodiments, wherein the quencher comprises a boric acid ester, zinc borate, boron phosphate, aluminum stearate, aluminum silicate, zirconium carbonate, zirconium $C_1$-$C_{12}$ alkoxides, zirconium hydroxycarboxylate, gallium phosphide, gallium antimonide, germanium oxide, $C_1$-$C_{32}$ organogermanium compound, $C_4$-$C_{32}$ tetraorganotin compound, $C_4$-$C_{32}$ hexaorganotin compound, $Sb_2O_3$, antimony oxide, $C_1$-$C_{32}$ alkylantimony, bismuth oxide, $C_1$-$C_{12}$ alkylbismuth, zinc acetate, zinc stearate, $C_1$-$C_{32}$ alkoxytitanium, and titanium oxide, phosphoric acid, phosphorous acid, hypophosphorous acid, pyrophosphoric acid, polyphosphoric acid, boric acid, hydrochloric acid, hydrobromic acid, sulfuric acid, sulfurous acid, adipic acid, azelaic acid, dodecanoic acid, L-ascorbic acid, aspartic acid, benzoic acid, formic acid, acetic acid, citric acid, glutamic acid, salicylic acid, nicotinic acid, fumaric acid, maleic acid, oxalic acid, benzenesulfinic acid, $C_1$-$C_{12}$ dialkyl sulfate, alkyl sulfonic ester of the formula $R_1SO_3R_2$ wherein $R_1$ is hydrogen, $C_1$-$C_{12}$ alkyl, $C_6$-$C_{18}$ aryl, or $C_7$-$C_{19}$ alkylaryl, and $R_2$ is $C_1$-$C_{12}$ alkyl, $C_6$-$C_{18}$ aryl, or $C_7$-$C_{19}$ alkylaryl, sulfonic acid phosphonium salt of the formula $(R^aSO_3^-(PR^b_4)^+$ wherein $R^a$ is hydrogen, $C_1$-$C_{12}$ alkyl, $C_6$-$C_{18}$ aryl, or $C_7$-$C_{19}$ alkylaryl, and each $R^b$ is independently hydrogen, $C_1$-$C_{12}$ alkyl or $C_6$-$C_{18}$ aryl, sulfonic acid derivative of the formula $A^1$-$(Y^1$-$SO_3X^1)_m$ wherein $A^1$ is a $C_1$-$C_{40}$ hydrocarbon group having a valence of m, $Y^1$ is a single bond or an oxygen atom, $X^1$ is a secondary or tertiary alkyl group of the formula $-CR^{15}R^{16}R^{17}$, a metal cation of one equivalent, an ammonium cation or a phosphonium wherein $R^{15}$ is a hydrogen atom or an alkyl group having 1 to 5 carbon atoms, $R^{16}$ is a hydrogen atom, a phenyl group or an alky group having 1 to 5 carbon atoms, and $R^{17}$ is the same as or different from $R^{15}$ and has the same definition as $R^{15}$, provided that

two of $R^{15}$, $R^{16}$ and $R^{17}$ cannot be hydrogen atoms, and m is an integer of 1 to 4, provided that when $Y^1$ is a single bond, all of $X^1$ in an amount of m cannot be metal cations of one equivalent, a compound of the formula $^+X^2$-$A^2$-$Y^1$-$SO_3^-$ wherein $A^2$ is a divalent hydrocarbon group, $^+X^2$ is a secondary, tertiary or quaternary ammonium cation or a secondary, tertiary or quaternary phosphonium cation, and $Y^1$ is a single bond or an oxygen atom, a compound of the formula $A^3$-$(^+X^3)_n$·$(R$-$Y^1$-$SO_3^-)_n$ wherein $A^3$ is a $C_1$-$C_{40}$ hydrocarbon group having a valence of n, $^+X^3$ is a secondary, tertiary or quaternary ammonium cation or a secondary, tertiary or quaternary phosphonium cation, R is a monovalent $C_1$-$C_{40}$ hydrocarbon group, n is an integer of 2 to 4, and $Y^1$ is a single bond or an oxygen atom, a compound of the formula $A^5$-$Ad^1$-$A^4$-$(Ad^2$-$A^5)$, wherein $A^5$ is a monovalent or divalent $C_1$-$C_{40}$ hydrocarbon group, $A^4$ is a divalent $C_1$-$C_{40}$ hydrocarbon group, each of $Ad^1$ and $Ad^2$ is independently an acid anhydride group selected from $-SO_2$-O-$SO_2$-, $-SO_2$-O-CO- and -CO-O-$SO_2$-, and $\ell$ is 0 or 1, provided that when $\ell$ is O, $-(Ad^2$-$A^5)_\ell$ is a hydrogen atom or a bond between $A^4$ and $A^5$, in which $A^5$ is a divalent hydrocarbon group or a single bond, aminosulfonic esters having the formula $R_aR_bN$-A-$SO_3R_c$, wherein $R_a$ and $R^b$ are each independently hydrogen, $C_1$-$C_{12}$ alkyl, $C_6$-$C_{22}$ aryl, $C_7$-$C_{19}$ alkylaryl or $R_a$ and $R_b$, either singly or in combination, form an aromatic or non-aromatic heterocyclic compound with N, $R_c$ is hydrogen, and A is $C_1$-$C_{12}$ alkyl, $C_6$-$C_{18}$ aryl, or $C_{17}$-$C_{19}$ alkylaryl, ammonium sulfonic esters of the formula $R_aR_bR_cN^+$-A-$SO_3^-$, wherein $R_a$, $R_b$, are each independently hydrogen, $C_1$-$C_{12}$ alkyl, $C_1$-$C_{12}$ aryl, $C_7$-$C_{19}$ alkylaryl, or $R_a$ and $R_b$, either singly or in combination, form an aromatic or non-aromatic heterocyclic compound with N, $R_c$ is a hydrogen, and A is $C_1$-$C_{12}$ alkyl, $C_6$-$C_{18}$ aryl, or $C_7$-$C_{19}$ alkylaryl, sulfonated polystyrene, methyl acrylate-sulfonated styrene copolymer, or a combination comprising at least one of the foregoing.

Embodiment 21: The process of any of the preceding embodiments, wherein the quencher comprises n-butyl tosylate.

Embodiment 21: The process of any of the preceding embodiments, wherein the weight average molecular weight of one or both of the quenched melt polycarbonate and the unquenched melt polycarbonate is 10,000 to 120,000 Daltons, specifically, 13,000 to 18,500 Daltons based on polycarbonate standards.

Embodiment 22: The process of any of the preceding embodiments, wherein one or both of the quenched melt polycarbonate and the unquenched melt polycarbonate has terminal hydroxyl groups in an amount of less than or equal to 20 mol% based on the molar total of all terminal groups of the polycarbonate.

Embodiment 23: The process of any of the preceding embodiments, wherein the alkali catalyst comprises a metal compound, wherein the metal comprises at least one of sodium, potassium, cesium; wherein if the metal compound comprises sodium sulfate, the amount of sodium is 0 to 1,690 ppm; if the metal compound comprises cesium sulfate, the amount of cesium is 0 to 275 ppm; if the metal compound comprises sodium hydroxide, the amount of sodium is 0 to 35 ppm; if the metal compound comprises potassium hydroxide, the amount of potassium is 0 to 50 ppm; if the metal compound comprises cesium hydroxide, the amount of cesium is 0 to 140 ppm; all based on the total weight of the alkali compound and metal compound.

Embodiment 24: The process of any of the preceding embodiments, wherein the quenched composition comprises mixing 40 to 60 wt%, specifically, 45 to 55 wt%, for example, 50 wt% of an unquenched melt polycarbonate and 40 to 60 wt%, specifically, 45 to 55 wt%, for example, 50 wt%.

Embodiment 25: The process of any of the preceding embodiments, wherein the quenched composition comprises an additive, specifically, a mold release agent, more specifically, glycerol tristearate.

In general, the disclosure can alternately comprise, consist of, or consist essentially of, any appropriate components herein disclosed. The disclosure can additionally, or alternatively, be formulated so as to be devoid, or substantially free, of any components, materials, ingredients, adjuvants or species used in the prior art compositions or that are otherwise not necessary to the achievement of the function and/or objectives of the present disclosure.

All ranges disclosed herein are inclusive of the endpoints, and the endpoints are independently combinable with each other (e.g., ranges of "up to 25 wt%, or, more specifically, 5 to 20 wt%", is inclusive of the endpoints and all intermediate values of the ranges of "5 to 25 wt%," etc.). "Combination" is inclusive of blends, mixtures, alloys, reaction products, and the like. Furthermore, the terms "first," "second," and the like, herein do not denote any order, quantity, or importance, but rather are used to denote one element from another. The terms "a" and "an" do not denote a limitation of quantity, but rather denote the presence of at least one of the referenced item. The term "or" means "and/or" unless clearly indicated otherwise by context. "Optional" or "optionally" means that the subsequently described event or circumstance may or may not occur, and that the description includes instances where the event occurs and instances where it does not. The suffix "(s)" as used herein is intended to include both the singular and the plural of the term that it modifies, thereby including one or more of that term (e.g., the film(s) includes one or more films). Reference throughout the specification to "one embodiment," "another embodiment," "an embodiment," and so forth, means that a particular element (e.g., feature, structure, and/or characteristic) described in connection with the embodiment is included in at least one embodiment described herein, and may or may not be present in other embodiments. In addition, it is to be understood that the described elements can be combined in any suitable manner in the various embodiments. Unless defined otherwise, technical and scientific terms used herein have the same meaning as is commonly understood by one of skill in the art to which this invention belongs.

The notation "+/-10%" means that the indicated measurement may be from an amount that is minus 10% to an amount that is plus 10% of the stated value.

Unless specified to the contrary herein, all test standards are the most recent standard in effect as of the filing date of this application, or, if priority is claimed, the filing date of the earliest priority application in which the test standard appears.

While particular embodiments have been described, alternatives, modifications, variations, improvements, and substantial equivalents that are or can be presently unforeseen can arise to applicants or others skilled in the art. Accordingly, the appended claims as filed and as they can be amended are intended to embrace all such alternatives, modifications variations, improvements, and substantial equivalents.

## Claims

1. A process for forming a quenched composition comprising:

   mixing 40 to 95 wt% of an unquenched melt polycarbonate and 5 to 60 wt% of a quenched melt polycarbonate to form the quenched composition, wherein the weight percentage is based upon a total weight of the quenched composition;
   wherein the quenched polycarbonate was formed from a first melt polymerization, and wherein the quenched melt polycarbonate comprises greater than or equal to 0.5 ppm of free quencher;
   wherein the unquenched polycarbonate was formed from a second melt polymerization, wherein the unquenched melt polycarbonate comprises an active catalyst that is capable of further polymerizing the unquenched polycarbonate and that was used during the second melt polymerization.

2. The process of Claim 1, wherein the quenched melt polycarbonate is free of an additive with a reactive OH group, where reactivity is with respect to the quenched melt polycarbonate and the unquenched melt polycarbonate; preferably wherein the quenched melt polycarbonate consists essentially of the melt polymerized polycarbonate, a quenched catalyst, the quencher, and optionally one or more of unreacted monomer, phenol, and ester-substituted phenol.

3. The process of any of the preceding claims, further comprising adding an additive with a reactive group after greater than or equal to 30 seconds of starting the mixing, or greater than or equal to 60 seconds of starting the mixing; wherein the additive with the reactive group optionally comprises 2-(2H-benzotriazol-2-yl)-4-(1,1,3,3-tetramethylbutyl)-phenol (CYASORB™ 5411), glycerol monostearate, or a combination comprising one or both of the foregoing.

4. The process of any of the preceding claims, further comprising receiving a first shipment of the quenched polycarbonate from a first source prior to mixing the unquenched melt polycarbonate and the quenched melt polycarbonate; and optionally
   receiving a second shipment of the unquenched polycarbonate from a second source prior to mixing the unquenched melt polycarbonate and the quenched melt polycarbonate, wherein the second source is different than the first source.

5. The process of any of the preceding claims, wherein one of the quenched polycarbonate and the unquenched polycarbonate has a melt flow rate of greater than or equal to 10 g/10 min and the other has a melt flow rate of less than or equal to 8 g/10 min as determined by ASTM D1238-04 at 250°C, 1.5 kilograms.

6. The process of any of the preceding claims, wherein one or both of the quenched melt polycarbonate and the unquenched melt polycarbonate was derived from a diaryl carbonate comprising a metal compound, wherein the metal compound comprises
   less than or equal to 500 ppb of molybdenum; less than or equal to 33 ppb of vanadium; less than or equal to 33 ppb of chromium; less than or equal to 75 ppb of titanium; less than or equal to 375 ppb of niobium; less than or equal to 33 ppb of nickel; less than or equal to 10 ppb of zirconium; and less or equal to 10 ppb iron; all based on the total weight of the diaryl carbonate and the metal compound.

7. The process of any of the preceding claims, wherein the quenched polycarbonate comprises 0.5 to 20 ppm of free quencher based on the total weight of the quenched polycarbonate.

8. The process of any of the preceding claims, wherein the mixture comprises 5 to 10 wt% of the quenched melt polycarbonate based on the total weight of the mixture.

9. The process of any of the preceding claims, wherein the unquenched polycarbonate comprises greater than or equal to 10 wt% active catalyst, based upon a total weight of catalyst used during second melt polymerization, and wherein less than 1 ppm quencher has been added during second melt polymerization, specifically, 0 ppm of a quencher has been added during second melt polymerization.

10. The process of any of the preceding claims, wherein one or more of the mixing occurs for less than or equal to 5 minutes, the mixing occurs at a tipspeed of 1 to 5 m/s, and the mixing occurs in a double shaft mixer rotating in opposite directions.

11. The process of any of the preceding claims, wherein the mixing does not melt a component with a melting temperature of 60°C.

12. The process of any of the preceding claims, wherein the quencher comprises n-butyl tosylate.

13. The process of any of the preceding claims, wherein the alkali catalyst comprises a metal compound, wherein the metal comprises at least one of sodium, potassium, cesium; wherein if the metal compound comprises sodium sulfate, the amount of sodium is 0 to 1,690 ppm; if the metal compound comprises cesium sulfate, the amount of cesium is 0 to 275 ppm; if the metal compound comprises sodium hydroxide, the amount of sodium is 0 to 35 ppm; if the metal compound comprises potassium hydroxide, the amount of potassium is 0 to 50 ppm; if the metal compound comprises cesium hydroxide, the amount of cesium is 0 to 140 ppm; all based on the total weight of the alkali compound and metal compound.

14. The process of any of the preceding claims, wherein one or both of the quenched melt polycarbonate and the unquenched melt polycarbonate has terminal hydroxyl groups in an amount of less than or equal to 20 mol% based on the molar total of all terminal groups of the polycarbonate.

15. The process of any of the preceding embodiments, wherein the quenched composition comprises glycerol tristearate.

## Patentansprüche

1. Ein Verfahren zum Bilden einer gelöschten Zusammensetzung, das Folgendes umfasst:

   das Mischen von 40 bis 95 Gewichtsprozent eines nicht gelöschten Schmelzpolycarbonats und 5 bis 60 Gewichtsprozent eines gelöschten Schmelzpolycarbonats, um die gelöschte Zusammensetzung zu bilden, wobei der Gewichtsprozentsatz auf einem Gesamtgewicht der gelöschten Zusammensetzung basiert;
   wobei das gelöschte Polycarbonat aus einer ersten Schmelzpolymerisation gebildet wurde und wobei das gelöschte Schmelzpolycarbonat mehr als oder gleich 0,5 ppm eines freien Ablöschmittels umfasst;
   wobei das nicht gelöschte Polycarbonat durch eine zweite Schmelzpolymerisation gebildet wurde, wobei das nicht gelöschte Schmelzpolycarbonat einen aktiven Katalysator umfasst, der in der Lage ist, das nicht gelöschte Polycarbonat weiter zu polymerisieren, und der während der zweiten Schmelzpolymerisation verwendet wurde.

2. Das Verfahren gemäß Anspruch 1, wobei das gelöschte Schmelzpolycarbonat frei von einem Zusatzstoff mit einer reaktiven OH-Gruppe ist, wobei Reaktivität sich auf das gelöschte Schmelzpolycarbonat und auf das nicht gelöschte Schmelzpolycarbonat bezieht; wobei das gelöschte Schmelzpolycarbonat vorzugsweise im Wesentlichen aus dem schmelzpolymerisierten Polycarbonat, einem gelöschten Katalysator, dem Ablöschmittel und wahlweise einem oder mehreren von nicht umgesetztem Monomer, Phenol und mit Ester substituiertem Phenol besteht.

3. Das Verfahren gemäß einem beliebigen der obigen Ansprüche, das weiter Folgendes umfasst: das Hinzufügen eines Zusatzstoffs mit einer reaktiven Gruppe nach mindestens 30 Sekunden nach dem Beginn des Mischvorgangs oder mindestens 60 Sekunden nach dem Beginn des Mischvorgangs; wobei der Zusatzstoff mit der reaktiven Gruppe wahlweise 2-(2H-Benzotriazol-2-yl)-4-(1,1,3,3-tetramethylbutyl)-phenol (CYASORB™ 5411), Glycerolmonostearat oder eine Kombination umfasst, die eines oder beide der oben Genannten umfasst.

4. Das Verfahren gemäß einem beliebigen der obigen Ansprüche, das weiter Folgendes umfasst: das Empfangen einer ersten Lieferung des gelöschten Polycarbonats von einer ersten Quelle vor dem Mischen des nicht gelöschten Schmelzpolycarbonats und des gelöschten Schmelzpolycarbonats; und wahlweise
das Empfangen einer zweiten Lieferung des nicht gelöschten Polycarbonats von einer zweiten Quelle vor dem

Mischen des nicht gelöschten Schmelzpolycarbonats und des gelöschten Schmelzpolycarbonats, wobei sich die zweite Quelle von der ersten Quelle unterscheidet.

5. Das Verfahren gemäß einem beliebigen der obigen Ansprüche, wobei entweder das gelöschte Polycarbonat oder das nicht gelöschte Polycarbonat einen Schmelzdurchfluss von mindestens 10g/10min hat und das andere einen Schmelzdurchfluss von höchstens 8g/10 min hat, bestimmt durch ASTM D1238-04 bei 250°C, 1,5 Kilogramm.

6. Das Verfahren gemäß einem beliebigen der obigen Ansprüche, wobei das gelöschte Schmelzpolycarbonat und/oder das nicht gelöschte Schmelzpolycarbonat von einem Diarylcarbonat abgeleitet wurden, das eine Metallverbindung umfasst; wobei die Metallverbindung Folgendes umfasst:
weniger als oder gleich 500 ppb Molybdän; weniger als oder gleich 33 ppb Vanadium; weniger als oder gleich 33 ppb Chrom; weniger als oder gleich 75 ppb Titan; weniger als oder gleich 375ppb Niob; weniger als oder gleich 33 ppb Nickel; weniger als oder gleich 10 ppb Zirkonium und weniger als oder gleich 10 ppb Eisen; alles basierend auf dem Gesamtgewicht des Diarylcarbonats und der Metallverbindung.

7. Das Verfahren gemäß einem beliebigen der obigen Ansprüche, wobei das gelöschte Polycarbonat 0,5 bis 20 ppm freies Ablöschmittel, basierend auf dem Gesamtgewicht des gelöschten Polycarbonats, umfasst.

8. Das Verfahren gemäß einem beliebigen der obigen Ansprüche, wobei die Mischung 5 bis 10 Gewichtsprozent des gelöschten Schmelzpolycarbonats, basierend auf dem Gesamtgewicht der Mischung, umfasst.

9. Das Verfahren gemäß einem beliebigen der obigen Ansprüche, wobei das nicht gelöschte Polycarbonat mehr als oder gleich 10 Gewichtsprozent aktiven Katalysator, basierend auf einem Gesamtgewicht an Katalysator, der während der zweiten Schmelzpolymerisation verwendet wird, umfasst, und wobei weniger als 1 ppm Ablöschmittel, im Speziellen 0 ppm eines Ablöschmittels, während der zweiten Schmelzpolymerisation hinzugefügt wurde.

10. Das Verfahren gemäß einem beliebigen der obigen Ansprüche, wobei eines oder mehrere des Mischens über weniger als oder gleich 5 Minuten stattfinden, das Mischen bei einer Blattspitzengeschwindigkeit von 1 bis 5 m/s stattfindet und das Mischen in einem Doppelwellenmischer stattfindet, der sich in entgegengesetzte Richtungen dreht.

11. Das Verfahren gemäß einem beliebigen der obigen Ansprüche, wobei das Mischen eine Komponente mit einer Schmelztemperatur von 60°C nicht zum Schmelzen bringt.

12. Das Verfahren gemäß einem beliebigen der obigen Ansprüche, wobei das Ablöschmittel n-Butyltosylat umfasst.

13. Das Verfahren gemäß einem beliebigen der obigen Ansprüche, wobei der Alkalikatalysator eine Metallverbindung umfasst, wobei das Metall mindestens eines von Natrium, Kalium, Cäsium umfasst; wobei, wenn die Metallverbindung Natriumsulfat umfasst, die Menge an Natrium 0 bis 1.690 ppm beträgt; wenn die Metallverbindung Cäsiumsulfat umfasst, die Menge an Cäsium 0 bis 275 ppm beträgt; wenn die Metallverbindung Natriumhydroxid umfasst, die Menge an Natrium 0 bis 35 ppm beträgt; wenn die Metallverbindung Kaliumhydroxid umfasst, die Menge an Kalium 0 bis 50 ppm beträgt; wenn die Metallverbindung Cäsiumhydroxid umfasst, die Menge an Cäsium 0 bis 140 ppm beträgt; alles basierend auf dem Gesamtgewicht der Alkaliverbindung und der Metallverbindung.

14. Das Verfahren gemäß einem beliebigen der obigen Ansprüche, wobei das gelöschte Schmelzpolycarbonat und/oder das nicht gelöschte Schmelzpolycarbonat Hydroxyl-Endgruppen in einer Menge von weniger als oder gleich 20 Molprozent, basierend auf der Gesamt-Molmenge aller Endgruppen des Polycarbonats, haben.

15. Das Verfahren gemäß einem beliebigen der obigen Ausführungsformen, wobei die gelöschte Zusammensetzung Glyceroltristearat umfasst.

**Revendications**

1. Procédé pour former une composition désactivée comprenant :

le mélange de 40 à 95 % en poids d'un polycarbonate fondu non désactivé et de 5 à 60 % en poids d'un polycarbonate fondu désactivé pour former la composition désactivée, les pourcentages en poids étant basés

sur le poids total de la composition désactivée ;
dans lequel le polycarbonate désactivé a été formé à partir d'une première polymérisation à l'état fondu, et dans lequel le polycarbonate fondu désactivé comprend 0,5 ppm ou plus de désactivateur libre ;
dans lequel le polycarbonate non désactivé a été formé à partir d'une deuxième polymérisation à l'état fondu, dans lequel le polycarbonate fondu non désactivé comprend un catalyseur actif qui est capable de polymériser encore le polycarbonate non désactivé et qui a été utilisé durant la deuxième polymérisation à l'état fondu.

**2.** Procédé selon la revendication 1, dans lequel le polycarbonate fondu désactivé est exempt d'additif ayant un groupe OH réactif, où la réactivité est par rapport au polycarbonate fondu désactivé et au polycarbonate fondu non désactivé ; de préférence dans lequel le polycarbonate fondu désactivé consiste essentiellement en le polycarbonate polymérisé fondu, un catalyseur désactivé, le désactivateur, et éventuellement un ou plusieurs parmi un monomère n'ayant pas réagi, du phénol, et un phénol à substitution ester.

**3.** Procédé selon l'une quelconque des revendications précédentes, comprenant en outre l'addition d'un additif ayant un groupe réactif dans les 30 secondes ou plus suivant le début du mélange, ou dans les 60 secondes ou plus suivant le début du mélange ; dans lequel l'additif ayant un groupe réactif comprend éventuellement du 2-(2H-benzotriazol-2-yl)-4-(1,1,3,3-tétraméthylbutyl)-phénol (CYASORB™ 5411), du monostéarate de glycérol, ou une combinaison comprenant l'un ou les deux ci-dessus.

**4.** Procédé selon l'une quelconque des revendications précédentes, comprenant en outre la réception d'une première cargaison du polycarbonate désactivé provenant d'une première source avant le mélange du polycarbonate fondu non désactivé et du polycarbonate fondu désactivé ; et éventuellement
la réception d'une deuxième cargaison du polycarbonate non désactivé provenant d'une deuxième source avant le mélange du polycarbonate fondu non désactivé et du polycarbonate fondu désactivé, laquelle deuxième source est différente de la première source.

**5.** Procédé selon l'une quelconque des revendications précédentes, dans lequel l'un parmi le polycarbonate désactivé et le polycarbonate non désactivé a un indice de fluage égal ou supérieur à 10 g/10 min et l'autre a un indice de fluage égal ou inférieur à 8 g/10 min, tel que déterminé conformément à la norme ASTM D1248-04 à 250°C sous une charge de 1,5 kilogrammes.

**6.** Procédé selon l'une quelconque des revendications précédentes, dans lequel l'un ou les deux parmi le polycarbonate fondu désactivé et le polycarbonate fondu non désactivé dérive d'un carbonate de diaryle comprenant un composé métallique, dans lequel le composé métallique comprend
500 ppb ou moins de molybdène ; 33 ppb ou moins de vanadium ; 33 ppb ou moins de chrome ; 75 ppb ou moins de titane ; 375 ppb ou moins de niobium ; 33 ppb ou moins de nickel ; 10 ppb ou moins de zirconium ; et 10 ppb ou moins de fer ; toutes par rapport au poids total du carbonate de diaryle et du composé métallique.

**7.** Procédé selon l'une quelconque des revendications précédentes, dans lequel le polycarbonate désactivé comprend 0,5 à 20 ppm de désactivateur libre par rapport au poids total du polycarbonate désactivé.

**8.** Procédé selon l'une quelconque des revendications précédentes, dans lequel le mélange comprend 5 à 10 % en poids du polycarbonate fondu désactivé par rapport au poids total du mélange.

**9.** Procédé selon l'une quelconque des revendications précédentes, dans lequel le polycarbonate non désactivé comprend 10 % en poids ou plus de catalyseur actif, par rapport au poids total de catalyseur utilisé durant la deuxième polymérisation à l'état fondu, et dans lequel moins de 1 ppm de désactivateur a été ajoutée durant la deuxième polymérisation à l'état fondu, spécifiquement 0 ppm de désactivateur a été ajoutée durant la deuxième polymérisation à l'état fondu.

**10.** Procédé selon l'une quelconque des revendications précédentes, dans lequel le mélange a lieu pendant 5 minutes ou moins, le mélange a lieu à une vitesse périphérique de 1 à 5 m/s, et le mélange a lieu dans un mélangeur à deux arbres tournant dans des directions opposées.

**11.** Procédé selon l'une quelconque des revendications précédentes, dans lequel le mélange ne fond pas un composant avec un point de fusion de 60°C.

**12.** Procédé selon l'une quelconque des revendications précédentes, dans lequel le désactivateur comprend du tosylate

de n-butyle.

13. Procédé selon l'une quelconque des revendications précédentes, dans lequel le catalyseur alcalin comprend un composé métallique, dans lequel le métal comprend au moins l'un parmi le sodium, le potassium, le césium ; dans lequel, si le composé métallique comprend du sulfate de sodium, la quantité de sodium est de 0 à 1690 ppm ; si le composé métallique comprend du sulfate de césium, la quantité de césium est de 0 à 275 ppm ; si le composé métallique comprend de l'hydroxyde de sodium, la quantité de sodium est de 0 à 35 ppm ; si le composé métallique comprend de l'hydroxyde de potassium, la quantité de potassium est de 0 à 50 ppm ; si le composé métallique comprend de l'hydroxyde de césium, la quantité de césium est de 0 à 140 ppm ; toutes par rapport au poids total du composé alcalin et du composé métallique.

14. Procédé selon l'une quelconque des revendications précédentes, dans lequel l'un ou les deux parmi le polycarbonate fondu désactivé et le polycarbonate fondu non désactivé ont des groupes hydroxyle terminaux en une quantité inférieure ou égale à 20 % en moles par rapport au nombre total de moles de tous les groupes terminaux du polycarbonate.

15. Procédé selon l'une quelconque des revendications précédentes, dans lequel la composition désactivée comprend du tristéarate de glycérol.

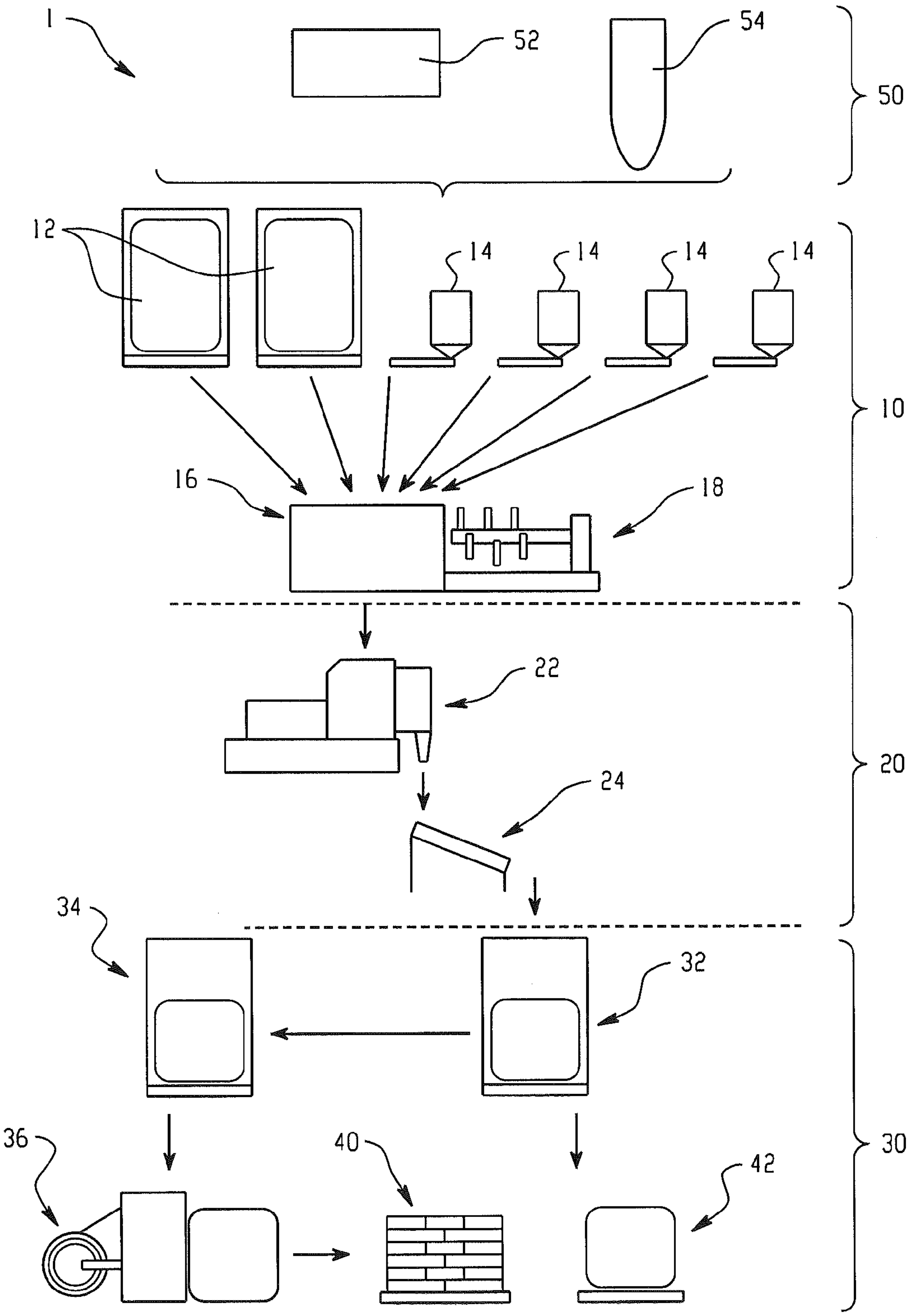


Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0056801 A1
- US 4154775 A


### Non-patent literature cited in the description


- *CHEMICAL ABSTRACTS,* 3147-75-9
- *CHEMICAL ABSTRACTS,* 123-94-4